(19) Europäisches Patentamt
European Patent Office
Office européen des brevets

(11) Publication number: **0 131 762 B1**

(12) **EUROPEAN PATENT SPECIFICATION**

(45) Date of publication of patent specification: 23.01.91

(51) Int. Cl.$^5$: A 01 N 25/04

(21) Application number: 84106802.6

(22) Date of filing: 14.06.84

(54) **Agricultural chemical preparation in the form of aqueous suspension.**

(30) Priority: 15.06.83 JP 108404/83

(43) Date of publication of application:
23.01.85 Bulletin 85/04

(45) Publication of the grant of the patent:
23.01.91 Bulletin 91/04

(84) Designated Contracting States:
CH DE FR GB IT LI

(56) References cited:
AU-B-490 010
FR-A-2 452 250
FR-E-85 313
GB-A-2 030 045

"10188 Chemical Goods", published by the Chemical Daily Co. Ltd., Tokyo, pages 946-948, 950-953

Remington's, 15th edition, 1975, page 334

The file contains technical information submitted after the application was filed and not included in this specification

(73) Proprietor: Sumitomo Corporation
15, Kitahama 5-chome
Higashi-ku Osaka (JP)

(73) Proprietor: YUKO CHEMICAL INDUSTRIES CO. LTD.
2-123, Tsutoiidencho
Nishinomiya Hyogo (JP)

(72) Inventor: Minagawa, Fumiyasu
10-3, Hotarugaike Higashimachi 2-chome
Toyonaka Osaka 560 (JP)
Inventor: Tange, Toshiyuki
7-4, Kisaki 2-chome
Akashi Hyogo 673 (JP)
Inventor: Maeda, Kazuyuki
18-5-714, Oimatsucho
Nishinomiya Hyogo 662 (JP)

(74) Representative: Baillie, Iain Cameron et al
c/o Ladas & Parry Isartorplatz 5
D-8000 München 2 (DE)

EP 0 131 762 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**Description**

The present invention relates to a pesticide preparation in the form of aqueous suspension or emulsion and to a method for producing the same.

Agricultural chemical preparations are usually used in the form of emulsifiable concentrates, wettable powders, dusts, suspensions, from among which the particular form is chosen depending on the purposes.

Out of these preparations, an aqueous preparation is preferred because it can be prepared using water in place of organic solvents which often cause toxicity problems and safety problems in production, storage, transportation or application thereof.

However, in an agricultural chemical preparation in the form of aqueous emulsion or suspension as heretofore proposed the active ingredients used are mainly hydrophobic and solid at room temperature and formulated as suspending. No oil-in-water type emulsion containing a liquid active ingredient at room temperature has yet put on the market, because a long period of stabilization cannot be achieved.

There is known a solubilized oil-in-water type agricultural chemical preparation containing active ingredients made into a particle size of 0.1 µm or less and a large amount (usually at least 2 times as much as the weight of the active ingredients) of a high HLB nonionic surfactant and/or an anionic surfactant. Such a preparation does not however solve the problems due to the presence of surfactant. For example, a long period of stabilization of the active ingredients can hardly be achieved, and there is unavoidable irritation of eyes, nose and throat. Therefore, the active ingredients usable in such preparation must be limited to those which have high stability even when emulsified or dispersed in water by the aid of a surfactant.

FR—E—85313 discloses an aqueous pesticide suspension comprising a hydrophobic solid active ingredient, a surfactant having an HLB value between 1.5 and 9, in hydrophilic colloid and a liquid hydrocarbon. The surfactant is a mono- or polyester of a fatty acid and a polyol and gives a "water in oil" type emulsion. The hydrocarbon is present in range of typically 10 to 25% and is required to physically stabilise the emulsion.

AU—B—490010 discloses a flowable aqueous composition comprising 10 to 60% water, a solid, water insoluble pesticide, 1 to 10% of a nonionic surfactant and 0.02 to 1% of a heteropolysaccharide gum (e.g. xanthan gum), all percentages being by weight. Ethoxylated alkylphenol surfactants of the general formula:

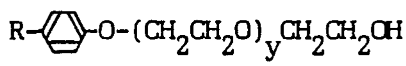

where R is $C_8$—$C_{12}$ alkyl and y is 8 to 30 are specifically disclosed. None of these surfactants have HLB value below 12.06 however. The order of mixing of the ingredients is stated not to be critical, although it is preferred to admix the heteropolysaccharide, surfactant, and any optional components thoroughly in the continuous water phase prior to adding the solid pesticide component.

GB 2,030,045A discloses a pesticidal aqueous suspension comprising a pesticide suspended in water in a finely dispersed state with, as dispersion agents, a surfactant having an HLB value less than 5 and polyvinylalcohol in the presence of typically 10 to 15% ethylene glycol and typically 10 to 45% of liquid paraffin as dispersion stabilisers. Sorbiton alkylate, polyoxyethylene alkylesters, polyethylene glycol alkyl (or alkylaryl) ether, monoglyceride, propylene glycol alkylate, saccharose alkyl ester, and polyoxyethylene-polyoxypropylene block copolymer surfactants are disclosed.

"Remington's Pharmaceutical Sciences" 15th Ed. (1975) P.334 and Table VI teaches that the higher the HLB value of a surfactant, the more likely it is to promote an oil-in-water emulsion and the less likely it is to promote a water-in-oil emulsion. Surfactants having HLB values of 8 to 18 are stated to be useful as oil-in-water (O/W) emulsifying agents and surfactants having HLB values of 10 to 18 are stated to be useful as solubilising agents.

FR 2,452,250 discloses an aqueous pesticidal composition comprising one or more water-insoluble pesticides, a nonionic surfactant containing an aromatic group substituted by one or more aryl or aralkyl substituents, and a water-soluble thickening agent. The preferred proportions are 10 to 16% pesticide, 2 to 15% surfactant, and 0.01 to 3% thickener. A class of surfactants of the formula:

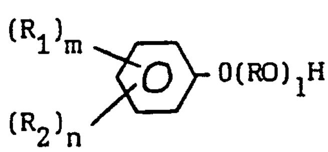

is disclosed wherein R, is

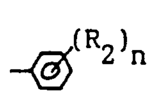 or 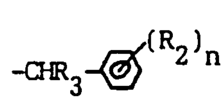

$R_3$ is H or $CH_3$, $R_2$ is a C, to $C_4$ alkyl group, R is a $C_2$ to $C_4$ alkylene group, m is 1 to 3, n is 0 to 2 and 1 is 8 to 40.

However no surfactant within this general formula has an HLB value of 11 or less. Furthermore, none of the surfactants specifically disclosed in this patent have an HLB value of 11 or less.

In one aspect the present invention provides a stable pesticide preparation in the form of an aqueous emulsion or suspension, consisting essentially of:

(1) 0.5 to 60% by weight of one or more active pesticide ingredients.
(2) 0.5 to 30% by weight of one or more nonionic surfactants,
(3) a thickener, and
(4) optionally one or more of:
a) a stabiliser of said one or more active ingredients,
b) a preservative,
c) an agent for the depression of freezing point, and
d) an antiseptic.

the balance being water and said one or more active ingredients being hardly soluble or insoluble in water, said surfactant having an HLB value of 11 or less and being

a) a polyoxyethylene arylether in which the aryl group carries an alkyl substituent and no other substituents,
b) a polyoxyethylene alkylether,
c) an aliphatic acid ester of polyoxyethylene,
d) a polyoxyethylene alkylamine,
e) an ester of a polyoxyethylene polyhydric alcohol,
f) an alkylarylether — formaldehyde condensate, or,
g) an aliphatic acid ester of a polyhydric alcohol, said one or more active ingredients being soluble in or miscible with the nonionic surfactant at room or elevated temperatures.

In another aspect the invention provides a method for producing a stable pesticide preparation in the form of an aqueous suspension or emulsion which comprises:

(1) mixing 0.5 to 60 parts by weight of one or more active pesticide ingredient(s) which are hardly soluble or insoluble in water, with 0.5 to 30 parts by weight of one or more of the following surfactants at room or elevated temperatures:
a) a polyoxyethylene arylether in which the aryl group carries an alkyl substituent and no other substituents,
b) a polyoxyethylene alkylether,
c) an aliphatic acid ester of polyoxyethylene,
d) a polyoxyethylene alkylamine,
e) an ester of a polyoxyethylene polyhydric alcohol,
f) an alkylarylether — formaldehyde condensate, or,
g) an aliphatic acid ester of a polyhydric alcohol, said one or more active ingredients being soluble in or miscible with the nonionic surfactant at room or elevated temperatures.

said surfactant having an HLB value of 11 or less, and

(2) dispersing the resulting mixture into an aqueous solution prepared by dissolving a thickener in water.

It has been found that an active ingredient, chemically unstable when formulated into the oil-in-water type preparation in the conventional manner, can be markedly stabilized by dispersing it in water using a nonionic surfactant having an HLB value of 11 or less and a thickener, in accordance with the present invention.

Pesticide preparations of the invention have the advantages that the active ingredient can be held stable for a long period of time, and can be handled without any risk of inflammation in the storage or transportation thereof and markedly decreased in the toxicity to mammals, as demonstrated in Table A.

The active ingredient usable in the present agricultural chemical preparation includes insecticides, fungicides, herbicides and rodenticides.

Examples of insecticides are as follows. Each common name is put in parenthesis.

(RS)-3-allyl-2-methyl-4-oxocyclopent-2-enyl (1RS)cis,trans-chrysanthemate [allethrin]

3-phenoxybenzyl (1RS)cis,trans-3-(2,2-dichlorovinyl)-2,2-dimethyl-cyclopropanecarboxylate [permethrin]

3-phenoxybenzyl (1RS)-cis,trans-chrysanthemate [phenothrin]

cyclohex-1-ene-1,2-dicarboximidomethyl (1RS)cis,trans-chrysanthemate [tetramethrin]

5-(2-propynyl)-2-furylmethyl (1RS)cis,trans-chrysanthemate [furamethrin]

5-benzyl-3-furylmethyl (1RS)cis,trans-chrysanthemate [resmethrin]

α-cyano-3-phenoxybenzyl α-isopropyl-4-chlorophenylacetate [fenvalerate]

O-(4-cyanophenyl)-O,O-dimethyl phosphorthioate [cyanophos]

O,O-diethyl-O-2-isopropyl-6-methylpyrimidin-4-yl phosphorothioate [diazinon]

2,2-dichlorovinyl-dimethyl phosphate [dichlorvos]

O,O,O′,O′-tetramethyl-O,O′-thiodi-p-phenylene bis(phosphorothioate) [temephos]

O-2,4-dichlorophenyl-O-ethyl-S-propyl phosphorodithioate [prothiophos]

O,O-diethyl-O-(2,3-dihydro-3-oxo-2-phenyl-6-pyridazinyl) phosphorothioate [pyridaphenthion]

O,O-dimethyl-O-4-nitro-m-tolyl phosphorothioate [fenitrothion]

O,O-dimethyl-O-2,4,5-trichlorophenyl phosphorothioate [fenchlorphos]
O,O-dimethyl-O-4-methylthio-m-tolyl phosphorothioate [fenthion]
O-4-bromo-2,5-dichlorophenyl-O,O-dimethyl phosphorothioate [bromophos]
S-1,2-bis(ethoxycarbonyl)ethyl-O,O-dimethyl phosphorodithioate [malathion]
O-3,5,6-trichloro-2-pyridyl-O,O-dimethyl phosphorothioate [chlorpyrifosmethyl]
2-(4-tert-butylphenoxy)cyclohexyl prop-2-ynyl sulfite [propargite]
1,2,4,5,6,7,8,8-octachloro-2,3,3a,4,7,7a-hexahydro,4,7-methanoindene [chlordane]
2-isopropoxyphenyl methylcarbamate [propoxur]
1-naphthyl methylcarbamate [carbaryl]
O-sec-butylphenyl methylcarbamate [BPMC]
4-chlorophenyl 2,4,5-trichlorophenyl sulfone [tetradifon]
S-6-chloro-2,3-dihydro-2-oxobenzoxazol-3-ylmethyl-O,O-diethyl phosphorodithioate [phosalone]
(E)-O-2-isoproxycarbonyl-1-methylvinyl-O-methyl-N-ethyl phosphoramidothioate [propentamphos]
Optical isomers are also usable. Examples of fungicides are as follows.
2-hydroxybiphenyl [O-phenylphenol]
N-(trichloromethylthio)cyclohex-4-ene-1,2-dicarboximide [captan]
2,4-dichloro-6-(2-chloroanilino)-1,3,5-triazixine [anilazine]
2-thiazol-4-ylbenzimidazole [thiabendazole]
1,4-bis(2,2,2-trichloro-1-formamidoethyl)piperazine [triforine]
p-chlorophenyl-3-iodopropargyl [IF-1000, a product of Nagase Sangyo Co.]
4-chloro-3,5-xylenol [PCMX, a product of Mitsubishi Gas Chemical Co.]
Diidomethyl p-tolyl sulfone [AMICAL 48, a product of Abbott Co.]
diisopropyl 1,3-dithiolan-2-ylidene-malonate [isoprothiolane]
2,4,6-tribromophenol [TBP, a product of Velcicol Chem. Co.]
Examples of herbicides are as follows.
3-(3,4-dichlorophenyl)-1,1-dimethylurea [diuron]
2-chloro-4,6-bis(ethylamino)-1,3,5-triazixine [simazine]
S-4-chlorobenzyl diethylthiocarbamate [thiobencarb]
3-(3,4-dichlorophenyl)-1-methoxy-1-methylurea [linuron]
2-chloro-4-ethylamino-6-isopropylamino,1,3,5-triazixine [atrazin]
Examples of rodenticides are as follows.
4-hydroxy-3-(3-oxo-1-phenylbutyl)coumarin [Warfarin]
3-(α-acetonylfurfuryl)4-hydroxycoumarin [coumafuryl]
1-(1-naphthyl)-2-thiourea [antu]
4-hydroxy-3-(1,2,3,4-tetrahydro-1-naphthyl)coumarin [coumatetralyl]
Examples of plant growth regulators are as follows.
P,P-dibutyl-N,N-diisopropyl-phosphinic amide [SD 1369, a product at Shell Development]
2,4-dichlorophenoxyacetic acid [2,4-D]
Others are as follows.
2,4,6,8-tetramethyl-1,3,5,7-tetraoxacyclooctane [metaldehyde]
3,5-dibromo-4-hydroxy-4'-nitroazobenzene [BAB]

The nonionic surfactants usable in the present invention are those having an HLB value of 11 or less, preferably 10 or less. Examples thereof are polyoxyethylene alkyl aryl ethers, such as polyoxyethylene nonphenyl ether, polyoxyethylene alkyl ethers, such as polyoxyethylene lauryl ether, polyoxyethylene esters, such as polyoxyethylene oleate, polyoxyethylene alkylamines, such as polyoxyethylene laurylamine, esters of polyhydric alcohols, such as sorbitan monooleate, esters of polyoxyethylene polyhydric alcohols such as polyoxyethylene-sorbitan oleate, and alkyl aryl ether/formaldehyde condensates. These surfactants may be used each alone or in the form of a mixture of two or more.

The thickeners usable in the present invention include, for example, gum arabic, polyvinyl alcohol, xanthan gum, CMC (carboxymethyl cellulose), carrageenan, tragacanth gum.

The preparations of the present invention may additionally contain stabilizers such as pH regulators for the purpose of further improving the stability of active ingredients, preservatives for preventing the contamination due to microorganisms and/or agents for the depression of freezing point in order to prevent the preparation from freezing at cold area.

The stabilizers usable in the present invention include, for example, phosphates, aliphatic acid diethanol-amide and butylhydroxytoluene.

The preservatives usable in the present invention include, for example, PCMX, dehydroacetic acid and butyl p-hydroxybenzoate.

The preparation of aqueous suspension thus obtained in accordance with the present invention can be characterized by the following advantages, as compared with a conventional suspension preparation.

(1) Even active ingredients said to be chemically unstable are able to be stabilized as demonstrated in Tables 6 and 7.

(2) Active ingredients which are liquid at room temperature can be formulated into the present aqueous preparation, and a mixture of a liquid active ingredient and a solid one can be formulated into the present aqueous preparation as shown in Examples 29 and 30.

(3) Nasal and eye irrigations which have been unavoidable due to surfactants, having an HLB value higher than 11 can be markedly decreased as demonstrated in Table A.

(4) Because of using a nonionic surfactant having an HLB value of 11 or less, the present preparation is superior in the spreadability onto the surfaces to be applied and residual effect against German cockroaches as shown in Table 9, and comparable in fast-acting effect against house-flies, as compared with a commercially available emulsifiable concentrate.

(5) Stable spray solution can be easily prepared, when the preparation of the present invention is diluted into water.

The present invention will be illustrated in more detail with reference to the following Examples. In Examples, the active ingredients used are expressed by each common name.

Example 1

Fenitrothion (10 g) was mixed with sorbitan monooleate (HLB 4.3, 5 g), and the mixture was suspended in an aqueous solution of xanthan gum (0.6 g) in deionized water (84.4 g) at 25°C to obtain an aqueous suspension preparation (100 g) of fenitrothion.

Example 2

Example 1 was repeated, provided that fenthion was used in place of fenitrothion, thereby obtaining an aqueous suspension preparation of fenthion.

Example 3

Example 1 was repeated, provided that cyanophos was used in place of fenitrothion, thereby obtaining an aqueous suspension preparation of cyanophos.

Comparative Example 1

A mixture of fenitrothion (10 g) and polyoxyalkylene polystyrylphenyl ether (HLB 13, 15 g) was mixed with an aqueous solution of diethyleneglycol monobutyl ether (15 g) in deionized water (60 g) to obtain an aqueous suspension preparation (100 g).

Comparative Example 2

Comparative Example 1 was repeated, provided that fenthion was used in place of fenitrothion, thereby obtaining an aqueous suspension preparation of fenthion.

Comparative Example 3

Comparative Example 1 was repeated, provided that cyanophos was used in place of fenitrothion, thereby obtaining an aqueous suspension preparation of cyanophos.

Examples 4 to 7 and Comparative Examples 4 to 6

In a manner similar to that of Example 1, each preparation having the composition as shown in the following Table 1 was obtained.

Table 1

| Composition | Example No. | | | | Comparative Example No. | | |
|---|---|---|---|---|---|---|---|
| | 4 | 5 | 6 | 7 | 4 | 5 | 6 |
| Fenitrothion | 10 | 10 | 10 | 10 | 10 | 10 | 10 |
| Polyoxyethylene nonylphenyl ether (HLB 5.5) | 5 | - | - | - | - | - | - |
| do. (HLB 7.5) | - | 5 | - | - | - | - | - |
| do. (HLB 8.9) | - | - | 5 | - | - | - | - |
| do. (HLB 10.9) | - | - | - | 5 | - | - | - |
| do. (HLB 13.3) | - | - | - | - | 5 | - | - |
| do. (HLB 15.0) | - | - | - | - | - | 5 | - |
| do. (HLB 16.0) | - | - | - | - | - | - | 5 |
| Sodium dehydroacetate | 0.2 | 0.2 | 0.2 | 0.2 | 0.2 | 0.2 | 0.2 |
| Xanthan gum | 0.6 | 0.6 | 0.6 | 0.6 | 0.6 | 0.6 | 0.6 |
| Deionized water | 84.2 | 84.2 | 84.2 | 84.2 | 84.2 | 84.2 | 84.2 |

Examples 8 to 11 and Comparative Examples 7 to 9

Similarly, each preparation having the composition as shown in the following Table 2 was obtained.

Table 2

| Composition | Example No. | | | | Comparative Example No. | | |
|---|---|---|---|---|---|---|---|
| | 8 | 9 | 10 | 11 | 7 | 8 | 9 |
| Fenthion | 5 | 5 | 5 | 5 | 5 | 5 | 5 |
| Polyoxyethylene lauryl ether (HLB 5.5) | 5 | - | - | - | - | - | - |
| do. (HLB 7.1) | - | 5 | - | - | - | - | - |
| Polyoxyethylene lauryl ether (HLB 8.6) | - | - | 5 | - | - | - | - |
| do. (HLB 10.4) | - | - | - | 5 | - | - | - |
| do. (HLB 14.1) | - | - | - | - | 5 | - | - |
| do. (HLB 15.6) | - | - | - | - | - | 5 | - |
| do. (HLB 18.4) | - | - | - | - | - | - | 5 |
| Sodium dehydroacetate | 0.2 | 0.2 | 0.2 | 0.2 | 0.2 | 0.2 | 0.2 |
| Xanthan gum | 0.6 | 0.6 | 0.6 | 0.6 | 0.6 | 0.6 | 0.6 |
| Deionized water | 89.2 | 89.2 | 89.2 | 89.2 | 89.2 | 89.2 | 89.2 |

Examples 12 and 13 and Comparative Examples 10 to 12

Similarly, each preparation having the composition as shown in the following Table 3 was obtained.

Table 3

| Composition | Example No. | | Comparative Example No. | | |
|---|---|---|---|---|---|
| | 12 | 13 | 10 | 11 | 12 |
| Diazinon | 5 | 5 | 5 | 5 | 5 |
| Polyoxyethylene oleate (HLB 2.5) | 5 | - | - | - | - |
| do. (HLB 9.3) | - | 5 | - | - | - |
| do. (HLB 11.4) | - | - | 5 | - | - |
| do. (HLB 15.3) | - | - | - | 5 | - |
| do. (HLB 16.1) | - | - | - | - | 5 |
| Potassium phosphate | 0.1 | 0.1 | 0.1 | 0.1 | 0.1 |
| Disodium hydrogenphosphate | 1.5 | 1.5 | 1.5 | 1.5 | 1.5 |
| Xanthan gum | 0.6 | 0.6 | 0.6 | 0.6 | 0.6 |
| Deionized water | 87.8 | 87.8 | 87.8 | 87.8 | 87.8 |

Examples 14 to 16 and Comparative Examples 13 and 14

Similarly, each preparation having the composition as shown in the following Table 4 was obtained.

Table 4

| Composition | Example No. | | | Comparative Example No. | |
|---|---|---|---|---|---|
| | 14 | 15 | 16 | 13 | 14 |
| Fenthion | 5 | 5 | 5 | 5 | 5 |
| Tetramethrin | 0.5 | 0.5 | 0.5 | 0.5 | 0.5 |
| Permethrin | 2 | 2 | 2 | 2 | 2 |
| Polyoxyethylene laurylamine (HLB 6.5) | 5 | - | - | - | - |
| do. (HLB 7.8) | - | 5 | - | - | - |
| do. (HLB 10.9) | - | - | 5 | - | - |
| do. (HLB 14.1) | - | - | - | 5 | - |
| do. (HLB 16.5) | - | - | - | - | 5 |
| Sodium dehydroacetate | 0.2 | 0.2 | 0.2 | 0.2 | 0.2 |
| Xanthan gum | 0.6 | 0.6 | 0.6 | 0.6 | 0.6 |
| Deionized water | 86.7 | 86.7 | 86.7 | 86.7 | 86.7 |

Examples 17 to 30 and Comparative Examples 15 and 16

Similarly, each preparation having the composition as shown in the following Table 5 was obtained.

Table 5

| Example No. | Composition | Amount (g) |
|---|---|---|
| 17 | Fenitrothion | 10 |
| | Sorbitan monolaurate (HLB 8.1) | 5 |
| | Xanthan gum | 0.6 |
| | Deionized water | 84.4 |
| 18 | Fenthion | 10 |
| | Sorbitan monooleate (HLB 4.3) | 5 |
| | Xanthan gum | 0.6 |
| | Sodium dehydroacetate | 0.2 |
| | Deionized water | 84.2 |
| 19 | Propargite | 30 |
| | Sorbitan monooleate (HLB 4.3) | 5 |
| | Polyvinyl alcohol* | 7 |
| | Potassium phosphate | 0.1 |
| | Disodium hydrogenphosphate | 1.5 |
| | Sodium dehydroacetate | 0.2 |
| | Deionized water | 56.2 |
| 20 | Propargite | 40 |
| | Sorbitan monooleate (HLB 4.3) | 5 |
| | Polyvinyl alcohol* | 5 |
| | Potassium phosphate | 0.1 |
| | Disodium hydrogenphosphate | 1.5 |
| | Sodium dehydroacetate | 0.2 |
| | Deionized water | 48.2 |
| 21 | Chlordane | 60 |
| | Sorbitan monooleate (HLB 4.3) | 5 |
| | Polyvinyl alcohol* | 3.5 |
| | Deionized water | 31.5 |

| | | |
|---|---|---|
| 22 | Cyanophos | 10 |
| | Polyoxyethylene nonylphenyl ether (HLB 5.5) | 5 |
| | Xanthan gum | 0.6 |
| | Deionized water | 84.4 |
| 23 | Diazinon | 30 |
| | Polyoxyethylene oleate (HBL 9.3) | 5 |
| | Polyvinyl alcohol* | 7 |
| | Potassium phosphate | 0.1 |
| | Disodium hydrogenphosphate | 1.5 |
| | Sodium dehydroacetate | 0.2 |
| | Deionized water | 56.2 |
| 24 | Fenthion | 40 |
| | Polyoxyethylene lauryl ether (HLB 9.6) | 5 |
| | Polyvinyl alcohol* | 5 |
| | Deionized water | 50 |
| 25 | Fenitrothion | 10 |
| | Permethrin | 2 |
| | Tetramethrin | 1 |
| | Sorbitan monooleate (HLB 4.3) | 5 |
| | Xanthan gum | 0.6 |
| | Sodium dehydroacetate | 0.2 |
| | Deionized water | 81.2 |
| 26 | Fenitrothion | 5 |
| | Tetramethrin | 0.5 |
| | Sorbitan monooleate (HLB 4.3) | 10 |
| | Xanthan gum | 0.6 |
| | Sodium dehydroacetate | 0.2 |
| | Deionized water | 83.7 |

| | | |
|---|---|---|
| 27 | Fenitrothion<br>Tetramethrin<br>Sorbitan monooleate (HLB 4.3)<br>Xanthan gum<br>Sodium dehydroacetate<br>Deionized water | 10<br>1<br>5<br>0.6<br>0.2<br>83.2 |
| 28 | Diazinon<br>Sorbitan monolaurate (HLB 8.1)<br>Polyoxyethylene laurylamine<br>Polyvinyl alcohol*<br>Potassium phosphate<br>Disodium hydrogenphosphate<br>Sodium dehydroacetate<br>Deionized water | 40<br>3<br>2<br>5<br>0.1<br>1.5<br>0.2<br>48.2 |
| 29 | Permethrin<br>Thiabendazole<br>Sorbitan monooleate (HLB 4.3)<br>Polyvinyl alcohol*<br>Deionized water | 15<br>5<br>10<br>3.3<br>66.7 |
| 30 | Fenitrothion<br>AMICAL 48<br>Sorbitan monooleate (HLB 4.3)<br>Polyvinyl alcohol*<br>Deionized water | 15<br>5<br>10<br>3.3<br>66.7 |
| Comparative Example 15 | Fenitrothion<br>Calcium alkylbenzenesulfonate<br>Polyoxyalkylene($C_{2-3}$, n=5-10) alkyl($C_{12-15}$)ether<br>Polyoxyethylene(n=5-10)octylphenyl ether | 10<br>2.3<br>2.2<br>0.5 |

| | | |
|---|---|---|
| Comparative Example 15 (cont'd) | Xylene<br>Kerosene | 20<br>65 |
| Comparative Example 16 | Fenitrothion<br>Tetramethrin<br>Calcium alkylbenzenesulfonate<br>Polyoxyalkylene($C_{2-3}$, n=5-10) alkyl($C_{12-15}$)ether<br>Polyoxyethylene(n=5-10)octylphenyl ether<br>Xylene<br>Kerosene | 5<br>0.5<br>2.3<br>2.2<br>0.5<br>20<br>69.5 |

Note * Polyvinyl alcohol having the polymerization degree of 1000 or less and the saponification degree of 86.5 to 89.0 mole %.

1. Stability of active ingredient

(1) Table 6

| | | Decomposition percentage of active ingredient after storage at 40°C for 30 days (%) |
|---|---|---|
| Example No. | 1 | 0.5 |
| | 2 | 0.2 |
| | 3 | 0.4 |
| Comparative Example No. | 1 | 38 |
| | 2 | 12 |
| | 3 | 35 |

(2) Table 7

| | | Decomposition percentage of active ingredient after storage at 50°C for 1 month (%) | | |
|---|---|---|---|---|
| Example No. | 4 | 6 | | |
| | 5 | 8 | | |
| | 6 | 9 | | |
| | 7 | 12 | | |
| Comparative Example No. | 4 | 28 | | |
| | 5 | 43 | | |
| | 6 | 58 | | |
| Example No. | 8 | 2 | | |
| | 9 | 2 | | |
| | 10 | 2 | | |
| | 11 | 3 | | |
| Comparative Example No. | 7 | 8 | | |
| | 8 | 11 | | |
| | 9 | 26 | | |
| Example No. | 12 | 5 | | |
| | 13 | 6 | | |
| Comparative Example No. | 10 | 10 | | |
| | 11 | 15 | | |
| | 12 | 21 | | |
| Example No. | | Fenthion | Tetramethrin | Permethrin |
| | 14 | 2 | 1 | 0.1 |
| | 15 | 2 | 1 | 0.1 |
| | 16 | 4 | 5 | 0.3 |
| Comparative Example No. | 13 | 11 | 8 | 0.6 |
| | 14 | 14 | 16 | 0.8 |
| Example No. | 18 | 1.0 | | |
| | 21 | 0 | | |
| | 26 | Fenitrothion 2 | Tetramethrin 5 | |

1. Comparision of efficiency

The preparation of aqueous suspension obtained in Example 26 was compared in the knock-down activity and residual effects respectively with the conventional emulsifiable concentrate obtained in

Comparative Example 16 (the active ingredients and its contents being fenitrothion 5% by weight, tetramethrin 0.5% by weight).

(1) Insecticidal effect against adult house flies by a filter paper contacting method

Adult flies were released onto a treated filter paper with each preparation immediately after treatment

dosage: 50 ml/$m^2$

dilution: 10 folds

The preparation of aqueous suspension in accordance with the present invention showed quick knockdown actively similar to that of the conventional emulsifiable concentrate.

(2) Insecticidal effect against German cockroaches by a glass plate continuously contacting method cockroaches were released onto a glass plate treated with solution of each preparation at indicated days counted mortality.

Table 9

10-fold diluent (50 mℓ/$m^2$) Continuous contacting at the same surfaces

| Preparations tested | Days after treatment | Mortality (%) | |
|---|---|---|---|
| | | After 24 hours | After 48 hours |
| Aqueous emulsion of the present invention (Example 26) | Immediately after | 100 | - |
| | After 1 week | 100 | - |
| | After 2 weeks | 100 | - |
| | After 3 weeks | 100 | - |
| | After 4 weeks | 96.7 | 100 |
| Conventional emulsifiable concentrate (Comparative Example 16) | Immediately after | 100 | - |
| | After 1 week | 100 | - |
| | After 2 weeks | 86.7 | 100 |
| | After 3 weeks | 73.3 | 100 |
| | After 4 weeks | 50.0 | 86.7 |

As is clear from the above results, the preparation of aqueous emulsion in accordance with the present invention is superior in the residual effect against German cockroaches to that of the conventional emulsifiable concentrate.

Table 8

(%) at indicated minutes after treatment.

| Preparations tested | Knock down ratio | | | | | | | | $KT_{50}$ | Mortality (%) |
|---|---|---|---|---|---|---|---|---|---|---|
| | 3 (min.) | 5 | 7 | 10 | 15 | 25 | 35 | 60 | (minute second) | After 24 hours |
| Aqueous suspension of the present invention (Example 26) | 0 | 13.3 | 43.3 | 80.0 | 93.3 | 100 | 100 | 100 | 7'37" | 100 |
| Conventional emulsifiable concentrate (Comparative Example 16) | 0 | 16.7 | 46.7 | 76.7 | 96.7 | 100 | 100 | 100 | 7'14" | 100 |

Table A  Data with respect to toxicity

| Test items \ Preparations | | 10% Aqueous emulsion of fenitrothion in accordance with the present invention (Example 1) | | Commercially available 10% emulsifiable concentrate of fenitrothion (Comparative Example 15) | |
|---|---|---|---|---|---|
| 1 | Acute oral toxicity test | $LD_{50}$ (mℓ/kg) | | | |
| | | ♂ | ♀ | ♂ | ♀ |
| | Mice | >20.0 | 15.0 | 7.1 | 9.8 |
| | Rats | 4.5 | 5.4 | 3.4 | 4.0 |
| 2 | Acute dermal toxicity test | $LD_{50}$ (mℓ/kg) | | | |
| | | ♂ | ♀ | ♂ | ♀ |
| | Mice | >10.0 | >10.0 | >10.0 | >10.0 |
| | Rats | >10.0 | >10.0 | >10.0 | >10.0 |
| 3 | Eye irritation test Rabbits | Original liquid shows no irritation (negative) | | Original liquid shows irritation to a slight or medium degree | |
| 4 | Skin irritation test Rabbits | Original liquid shows no irritation (negative) | | Original liquid shows irritation to an extremely slight degree | |

## Claims

1. A stable pesticide preparation in the form of an aqueous emulsion or suspension, consisting essentially of:
(1) 0.5 to 60% weight of one or more active pesticide ingredients.
(2) 0.5 to 30% by weight of one or more nonionic surfactants,
(3) a thickener, and
(4) optionally one or more of:
a) a stabiliser of said one or more active ingredients,
b) a preservative,
c) an agent for the depression of freezing point, and
d) an antiseptic,
the balance being water and said one or more active ingredients being hardly soluble or insoluble in water, said surfactant having an HLB value of 11 or less and being
(1) a) a polyoxyethylene arylether in which the aryl group carries an alkyl substituent and no other substituents,
b) a polyoxyethylene alkylether,
c) an aliphatic acid ester of polyoxyethylene,
d) a polyoxyethylene alkylamine,
e) an ester of a polyoxyethylene, polyhydric alcohol,
f) an alkylarylether — formaldehyde condensate, or,

g) an aliphatic acid ester of a polyhydric alcohol, sand one or more active ingredients being soluble in or miscible with the nonionic surfactant at room or elevated temperatures.

2. A pesticide preparation as claimed in Claim 1 wherein said nonionic surfactant has an HLB value of 5.5 or greater.

3. A pesticide preparation as claimed in Claim 1 or Claim 2, comprising a said active ingredient which is an insecticide, a fungicide, a herbicide, a rodenticide, BAB (3,5-dibromo-4-hydroxy-4'-nitroazobenzene) or methaldehyde.

4. A pesticide preparation as claimed in any preceding Claim, wherein said thickness is gum arabic, polyvinyl alcohol, xanthan gum, CMC (carboxymethylcellulose), carrageenan or tragacinth gum.

5. A pesticide preparation as claimed in any preceding Claim comprising one or more of: fenitrothion, fenthion, cyanophos, diazinon, pyridaphenthion, prothiophos, temephos, tetramethrin, permethrin, phenothrin, resmethrin, chlordane, propargite and thiabendazole as said one or more active ingredients.

6. A method for producing a stable pesticide preparation in the form of an aqueous suspension or emulsion which comprises:

1) mixing 0.5 to 60 parts by weight of one or more active pesticide ingredient(s) which are hardly soluble or insoluble in water, with 0.5 to 30 parts by weight of one or more of the following surfactants at room or elevated temperatures:

a) a polyoxyethylene arylether in which the aryl group carries an alkyl substituent and no other substituents,

b) a polyoxyethylene alkylether,

c) an aliphatic acid ester of polyoxyethylene,

d) a polyoxyethylene alkylamine,

e) an ester of a polyoxyethylene polyhydric alcohol,

f) an alkylarylether — formaldehyde condensate, or,

g) an aliphatic acid ester of a polyhydric alcohol, said one or more active ingredients being soluble in or miscible with the nonionic surfactant at room or elevated temperatures.

said surfactant having an HLB value of 11 or less, and

2) dispersing the resulting mixture into an aqueous solution prepared by dissolving a thickener in water.

7. A method of killing insects which comprises the steps of producing a stable pesticide preparation in the form of an aqueous suspension or emulsion by a method as claimed in claim 6, and applying the pesticide preparation to the insects.

8. A method of killing insects which comprises applying a pesticide emulsion or suspension as claimed in any of claims 1 to 5 to the insects.

**Patentansprüche**

1. Stabiles Schädlingsbekämpfungspräparat in Form einer wäßrigen Emulsion oder Suspension, bestehend aus:

(1) 0,5 bis 60 Gew.-% eines oder mehrerer Schädlingsbekämpfungswirkstoffe,

(2) 0,5 bis 30 Gew.-% eines oder mehrerer nichtionischer Tenside,

(3) einem Verdickungsmittel und

(4) gegebenenfalls einem oder mehreren der folgenden Bestandteile

a) einem Stabilisator für den einen oder die mehreren Wirkstoffe,

b) ein Konservierungsmittel,

c) ein Mittel zum Herabsetzen des Gefrierpunktes und

d) ein Antiseptikum,

Rest Wasser, wobei der eine oder die mehreren Wirkstoffe in Wasser kaum oder nicht löslich sind und das Tensid ein hydrophil-lyophiles Gleichgewicht von 11 oder weniger hat und

a) ein Polyoxyethylenarylether ist, in dem die Arylgruppe ein Alkyl als Substituenten und keine andere Substituenten trägt, oder

b) ein Polyoxyethylenalkylether,

c) ein Ester des Polyoxyethylens mit einer aliphatischen Säure,

d) ein Polyoxyethylenalkylamin,

e) ein Ester eines Polyoxyethylens mit einem mehrwertigen Alkohol,

f) ein Alkylarylether-Formaldehyd-Kondensationsprodukts oder

g) ein Ester einer aliphatischen Säure mit einem mehrwertigen Alkohol, wobei der eine oder die mehreren Wirkstoffe bei Zimmertemperatur oder erhöhter Temperatur in den nichtionischen Tensiden löslich oder mit ihnen mischbar sind.

2. Schädlingsbekämpfungspräparat nach Anspruch 1, dadurch gekennzeichnet, daß das nichtionische Tensid ein hydrophil-lyophiles Gleichgewicht von 5,5 oder mehr hat.

3. Schädlingsbekämpfungspräparat nach Anspruch 1 oder 2, der als Wirkstoff ein Insektizid, ein Fungizid, ein Herbizid, ein Rodenticid, BAB (3,5-Dibrom-4-hydroxy-4'-nitrazobenzol) oder Methaldehyd enthält.

4. Schädlingsbekämpfungspräparat nach einem der vorhergehenden Ansprüche, dadurch

gekennzeichnet, daß das Verdickungsmittel Gummi arabicum, Polyvinylalkohol, Xanthengummi, CMC (Carboxymethylcellulose) Carrageen-oder Traganthgummi ist.

5. Schädlingsbekämpfungspräparat nach einem der vorhergehenden Ansprüche, die als einen oder mehrere Wirkstoffe eine oder mehrere der folgenden Substanzen enthält: Fenitrothion, Fenthion, Cyanophos, Diazinon, Pyridaphenthion, Prothiophos, Temephos, Tetramethrin, Permethrin, Phenothrin, Remethrin, Chlordan, Propargit und Thiabendazol enthält.

6. Verfahren zum Erzeugen eines stabilen Schädlingsbekämpfungspräparats in Form einer wäßrigen Suspension oder Emulsion, in dem:

1) bei Zimmertemperatur oder einer erhöhten Temperatur 0,5 bis 60 Gewichtsteile eines oder mehrerer Schädlingsbekämpfungs-Wirkstoffe, die in Wasser kaum oder nicht löslich sind, mit 0,5 bis 30 Gewichsteilen eines oder mehrerer der nachstehenden Tenside vermischt werden:

a) ein Polyoxyethylenarylether, in dem die Arylgruppe ein Alkyl als Substituenten und keine andere Substituenten trägt,
b) ein Polyoxyethylenalkylether,
c) ein Ester des Polyoxyethylens mit einer aliphatischen Säure,
d) ein Polyoxyethylenalkylamin,
e) ein Ester eines Polyoxyethylens mit einem mehrwertigen Alkohol,
f) ein Alkylarylether-Formaldehyd-Kondensationsprodukts oder
g) ein Ester einer aliphatischen Säure mit einem mehrwertigen Alkohol, wobei der eine oder die mehreren Wirkstoffe bei Zimmertemperatur oder erhöhter Temperatur in den nichtionischen Tensiden löslich oder mit ihnen mischbar sind,

wobei das Tensid ein hydrophil-lyophiles Gleichgewicht von 11 oder weniger hat, und

2) das so erhaltene Gemisch in einer durch Auflösen eines Verdickungsmittels in Wasser hergestellten, wäßrigen Lösung dispergiert wird.

7. Verfahren zum Töten von Insekten mit folgenden Schritten: nach einem Verfahren nach Anspruch 6 wird ein stabiles Schädlingsbekämpfungspräparat in Form einer wäßrigen Suspension oder Emulsion hergestellt, und das Schädlingsbekämpfungspräparat wird auf die Insekten appliziert.

8. Verfahren zum Töten von Insekten, in dem eine Schädlingsbekämpfungs-Emulsion oder -Suspension nach einem der Ansprüche 1 bis 5 auf de Insekten appliziert wird.

**Revendications**

1. Préparation stable de pesticide sous la forme d'une émulsion ou d'une suspension aqueuse, consistant en:

(1) de 0,5 à 60% en poids d'un ou plusieurs ingrédients pesticides actifs,
(2) de 0,5 à 30% en poids d'un ou plusieurs agents tensio-actifs non ioniques,
(3) d'un épaississant, et
(4) éventuellement, d'un ou plusieurs de:

a) un stabilisant desdits un ou plusieurs ingrédients actifs,
b) un conservateur,
c) un agent d'abissement du point de congélation, et
d) un antiseptique,

le solde étant de l'eau et lesdits un ou plusieurs ingrédients actifs étant peu solubles dans l'eau ou insolubles dans l'eau, l'agent tensio-actif ayant une valeur d'équilibre hydrophile lypophile (HLB) de 11 ou inférieure à 11 et étant

a) un étheroxyde arylique de polyoxyéthylène dans lequel le groupe aryle porte un substituant alcoyle et pas d'autres substituants,
b) un étheroxyde alcoylique de polyoxyéthylène,
c) un ester d'acide aliphatique de polyoxyéthylène,
d) une polyoxyéthylène alcoylamine,
e) un ester d'un polyoxyéthylène polyalcool,
f) un produit de condensation du formaldéhyde et d'un étheroxyde alcoylarylique, ou
g) un ester d'acide aliphatique de polyalcool, lesdits un ou plusieurs ingrédients actifs étant solubles ou miscibles aux agents tensio-actifs non ioniques à la température ambiante ou à des températures élevées.

2. Préparation pesticide suivant la revendication 1, dans laquelle l'agent tensio-actif non ionique a une valeur de HLB de 5,5 ou supérieure à 5,5.

3. Préparation pesticide suivant la revendication 1 ou la revendication 2, comprenant un ingrédient actif qui est un insecticide, un fongicide, un herbicide, un rodenticide, du BAB (3,5-dibromo-4-hydroxy-4'-nitrazobenzène) ou du méthaldéhyde.

4. Préparation pesticide suivant l'une quelconque des revendications précédentes, dans laquelle l'agent épaississant est de la gomme arabique, de l'alcool polyvinylique, de la gomme de xanthane, de la CMC (carboxyméthylcellulose), de la gomme de carragheen ou de la gomme adragante.

5. Préparation pesticide suivant l'une des revendications précédentes, comprenant, comme lesdits un ou plusieurs ingrédients actifs, un ou plusieurs des: fenitrothion, fenthion, cyanophos, diazinon,

pyridaphènthion, prothiophos, téméphos, tétraméthrin, perméthrin, phénothrin, resméthrin, chlordane, propargite et thiabendazole.

6. Procédé de préparation d'une préparation pesticide stable sous la forme d'une suspension ou d'une émulsion aqueuse qui consiste:

1) à mélanger de 0,5 à 60 parties en poids d'un ou de plusieurs ingrédients pesticides actifs qui sont peu solubles ou qui sont insolubles dans l'eau à 0,5 à 30 parties en poids d'un ou de plusieurs des agents tensio-actifs suivants, en opérant à température ambiante ou à des températures élevées:

a) un étheroxyde arylique de polyoxyéthylène dans lequel le groupe aryle porte un substituant alcoyle et pas d'autres substituants,
b) un étheroxyde alcoylique de polyoxyéthylène,
c) un ester d'acide aliphatique de polyoxyéthylène,
d) une polyoxyéthylène alcoylamine,
e) un ester d'un polyoxyéthylène polyalcool,
f) un produit de condensation du formaldéhyde et d'un étheroxyde alcoylarylique, ou
g) un ester d'acide aliphatique de polyalcool, lesdits un ou plusieurs ingrédients actifs étant solubles ou miscibles aux agents tensio-actifs non ioniques à la température ambiante ou à des températures élevées,

l'agent tensio-actif ayant une valeur d'HLB de 11 ou inférieure à 11, et

2) à disperser le mélange obtenu dans une solution aqueuse préparée en dissolvant un épaississant dans de l'eau.

7. Procédé pour tuer des insectes qui comprend les stades de préparation d'une préparation pesticide stable, sous la forme d'une suspension ou d'une émulsion aqueuse, par un procédé tel que revendiqué à la revendication 6, et d'application de la préparation pesticide aux insectes.

8. Procédé pour tuer des insectes, qui consiste à appliquer une émulsion ou une suspension de pesticide telle que revendiquée à l'une quelconque des revendications 1 à 5.